# EUROPEAN PATENT APPLICATION

(11) **EP 2 329 748 A1**
(43) Date of publication of application: **08.06.2011**
(21) Application number: 09178166.6
(22) Date of filing: 07.12.2009
(51) Int. Cl.: A47J 27/21, A47J 37/06

(54) **Heating device and method for producing a heating device**

(71) Applicant: Koninklijke Philips Electronics N.V., 5621 BA Eindhoven (NL)
(72) Inventor: Sladecek, Marcel, 5600 AE, Eindhoven (NL)
(74) Representative: Damen, Daniel Martijn

(57) **Abstract**

A heating device (100) is disclosed that comprises a heat distribution member (130), a heat source (110) which is in thermal communication with the heat distribution member (130), said heat source (110) being arranged to heat the heat distribution member (130). The heating device (100) further comprises a temperature sensor (200) for sensing a temperature of the heat distribution member (130). The temperature sensor (200) is positioned in a region of the heat distribution member, which region corresponds to a hot spot (170) of the heat distribution member (130) during operation of the heating device (100).

## Description

### FIELD OF THE INVENTION

The present invention relates to a heating device. The present invention further relates to a method for producing such a device.

### BACKGROUND OF THE INVENTION

Heating devices are well-known and come in a large variety of embodiments. A particular field in which heating devices are used is the field of food preparation. In this field particular examples of cooking devices in which heating devices are used, are water cookers, electric pizza pans, glass-ceramic cook tops, slow cookers, etcetera. Normally such cooking devices, i.e. the heating devices used therein, comprise a heat source that heats a contact plate via a heat distribution plate, wherein the contact plate is in contact with the food to be prepared or liquid to be heated.

Usually a temperature sensor is provided that is arranged to sense the temperature of the content of the cooking device. The temperature sensed is used to control the operation of the cooking device, for example by maintaining a temperature set by a user, and/or to control a maximum temperature to avoid scorching of the food being prepared. On the other hand, such temperature sensors may also be used to go through predefined temperature profiles (heating/cooling) to obtain optimal cooking results.

Usually the temperature sensor is mounted such so as to avoid direct contact of the components of the temperature sensor with the contents of the cooking device, for example in case of a pizza pan. Such mounting of the temperature sensor however reduces the accuracy of the temperature sensor as the sensor does not directly measure the temperature of the contents of the cooking device, but rather measures the temperature of the heating distribution plate or the contact plate. Because of this, discrepancies may arise between the measured temperature and the actual temperature of the contents of the cooking device. This may result in scorching, overcooking or even a shut-off of the cooking device before the food has been properly prepared.

WO 2007/131271 A1 address the above concern and discloses a heating vessel for heating contents located in a heating chamber of the heating vessel, the heating vessel including a contact plate having a contact surface configured to be in direct thermal communication with the contents located in the heating chamber of the vessel. The vessel further comprises a heat distribution plate in thermal communication with the contact plate, the heat distribution plate being shaped so that the heat distribution plate is remote from the contact plate in at least one region to define a thermally insulating zone. Further, a heat source is provided that is in thermal communication with the heat distribution plate. An electronic temperature sensor is located in the thermally insulating zone, wherein the temperature sensor is in thermal communication with the contact plate. The temperature sensor is thermally insulated from the heat distribution plate by the thermally insulating zone.

In particular WO 2007/131271 A1 teaches to use an electric heating coil that terminates in two cold tails that carry electrical connections and that the temperature sensor must be located between the cold tails to further insulate the temperature sensor from the heat generated by the heat source.

From US 6,403,932 a controller for a heating unit is known. The heating unit is capable of generating heat to a utensil and has a temperature sensor, a heating element, and a cooking surface. The controller has a means for measuring a temperature of a cavity within the heating unit and a means for controlling the application of power to the heating element. The heating unit comprises an insulation cake base having a top and a bottom surface, wherein the top surface is arranged to receive a heating element that is spirally wound over the top surface in dedicated grooves in said top surface. In the center of the base a hole is provided in which the temperature sensor is located. The hole corresponds to a cold spot of the base and thus of the heating element.

A concern of the solutions of WO 2007/131271 A1 is that it is unsuitable to avoid scorching and/or overheating of the contents of the contents of the heating vessel making the solution unsuitable in preparing food that is sensitive to scorching and/or overheating. A further concern of the known solution of WO 2007/131271 and US 6,403,932 is that the heating vessel respectively the cake base will exhibit a slow response to changes in temperature settings as the temperature sensor is located between the cold tails respectively in a cold spot of the heat source and is insulated from the heat source.

### OBJECT OF THE INVENTION

It would be desirable to provide a heating device that is suitable for the preparation of foodstuff and which reduces the risk of scorching and/or overheating of the foodstuff to be prepared. Further, it would be desirable to provide a heating device that has an improved response time.

### SUMMARY OF THE INVENTION

To better address the above-indicated concerns a heating device is proposed that comprises a heat distribution member, a heat source which is in thermal communication with the heat distribution member, said heat source being arranged to heat the heat distribution member. The heating device further comprises a temperature sensor for sensing a temperature of the heat distribution member. The temperature sensor is positioned in a region of the heat distribution member, which region corresponds to a hot spot of the heat distribution member during operation of the heating device.

Positioning the temperature sensor in the so-called hot spot reduces the risk of overheating and/or scorching of food that is prepared as the temperature can be controlled on the basis of the highest temperature that is transmitted. A hot spot of the heat distribution member can for example be defined as a region that exhibits a higher temperature than an average temperature of the heat distribution member. Alternatively, a hot spot can be defined as a localized region having a higher temperature than regions of the heat distribution member adjoining the hot spot. In another definition a hot spot is a region that has a temperature during operation which is in the range of 80 to 100% of a maximum temperature of the heat distribution member.

Furthermore, as the temperature sensor is located in a region that corresponds to the hot spot of the heat distribution member, a faster response time can be achieved. Furthermore, control of the heating device is improved in comparison with the solution of the prior art in which the temperature sensor is located in a cold spot, as overshoot of the set temperature is avoided. Further, a less sophisticated sensor can be used, which reduces costs of manufacture.

In an embodiment the heat source comprises a heating coil that is attached to a first side of the heat distribution member. This provides a good distribution of the heat produced by the heat source. When using a heating coil the hot spot of the heat distribution member can normally be found in those regions where the density of the heating coil is greatest.

In an embodiment the heating coil is an electrical heating member, which makes the heating device suitable for domestic use.

In an embodiment the temperature sensor is provided with an insulation layer, electrically insulating the temperature sensor from the heat distribution member, such that safety is improved when the heat source is an electrical heating member. Insulation layers provide good electrical insulation while at the same time providing a high heat transfer to the temperature sensor.

In an embodiment the temperature sensor is in thermal communication with the heat source, which further improves temperature measurement.

In an embodiment the heat distribution member is provided with a bore in said region and wherein the temperature sensor is positioned in said bore. Such a bore can for example be made in the material of the heat distribution member by drilling. In this manner the temperature sensor is enclosed by the material of the heat distribution member and can be seen as being positioned literally inside the hot spot. This further improves measurement of the temperature

In an embodiment the heating device further comprises a contact member provided on a second side of the heat distribution device and in thermal communication therewith, the contact member being arranged to directly contact a body to be heated by the heating device. In this manner direct access to sensitive components of the heating device is avoided and damage can be prevented.

In an embodiment the contact member and the heat distribution device are integrated in a single member. In other words, the heat distribution member and the contact member may be one and the same member, which reduces complexity of the heating device.

In an embodiment the contact member covers said bore and the temperature sensor is attached to said contact member, such that the temperature sensor can directly measure the temperature of a hot spot of the contact member. Furthermore, a temperature measurement is obtained that very closely corresponds to a hot spot in the body to be heated being the heating device.

In a second aspect of the present invention a method of producing a heating device is provided, the method including providing a heat distribution member, providing a heat source in thermal communication with the heat distribution member and determining a region of the heat distribution member which region corresponds to a hot spot of said heat distribution member during use of the heating device. The method further includes mounting a temperature sensor in said region that corresponds to the hot spot of the heat distribution member.

In a third aspect of the present invention a temperature controlled kitchen appliance is provided, the kitchen appliance comprising a vessel for containing foodstuff and a heating device according to the invention, wherein the vessel is in thermal communication with the heat distribution member. A cooking device comprising the heating device according to the invention will be temperature controlled on the basis of the highest temperature of the heat distribution member. This means that scorching and/or overheating of foodstuff contained in the vessel can be avoided.

### BRIEF DESCRIPTION OF THE DRAWINGS

Fig. 1A shows a cross section of a heating device;
Fig. 1B shows a bottom view of a heating device;
Fig. 2A shows a cross section of a kitchen appliance with a heating device, and
Fig. 2B shows a bottom view of the kitchen appliance of Figure 2A.

### DETAILED DESCRIPTION OF EXAMPLES

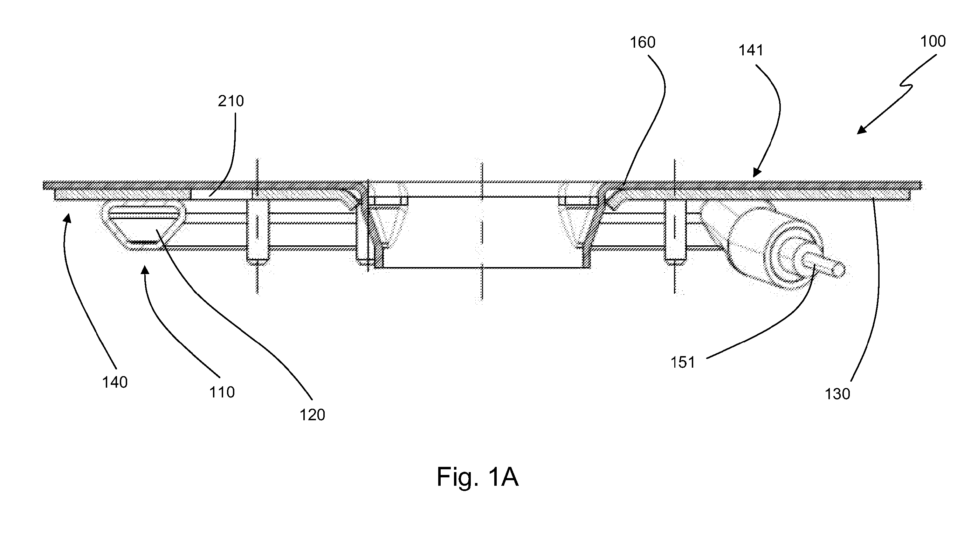

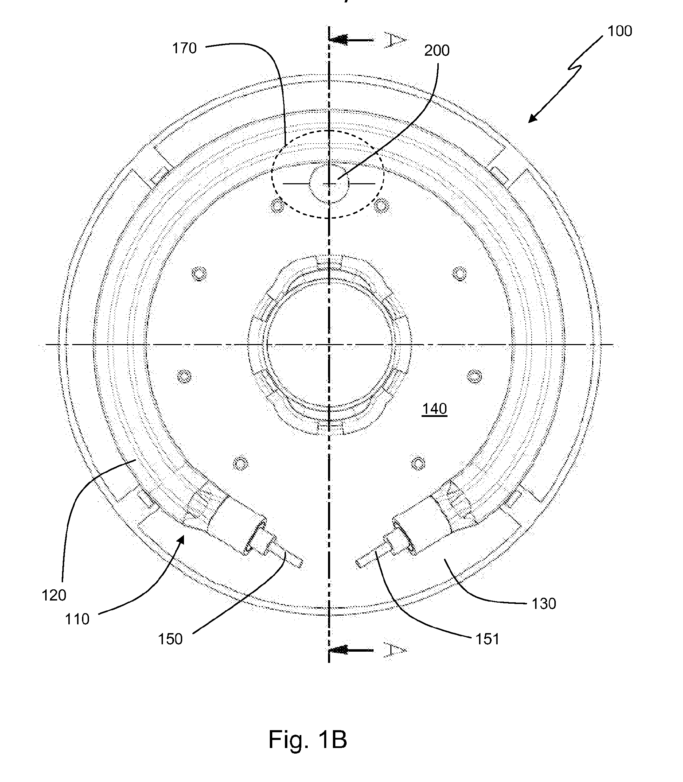

Figure 1A and Figure 1B shows a heating device 100 in an embodiment according to the present invention in a cross-sectional view respectively in a bottom view. The cross-sectional view of Figure 1A is taken along a line A-A in Figure 1B.

The heating device 100 comprises a heat source 110 that is in thermal communication with a heat distribution member 130. In the example of Figure 1A the heat source 110 comprises a heating coil120 that is attached to a first side 140 of the heat distribution member 130. The heating coil120 in the example of Figure 1A, 1B is an electrical heating member having electrical contacts 150, 151 for supplying the heating device 100 with electrical power. In general, the heating coil 120 is a resistive heating element. It is noted that other types of heating members are also conceivable, such as halogen heaters, induction heater and microwave heaters. More in particular the heat source 110 is not limited to heating coils only. Many other types of, preferably, resistive heating members are possible. The heat distribution member 130 is arranged to distribute the heat generated by the heat source 110, i.e. the heating coil 120, in an evenly distributed manner. However, as will be explained in more detail below, the occurrence of so-called hot spots in the heat distribution member 130 cannot be completely avoided.

On a second side 141 of the heat distribution member 130 a contact member 160 is provided. The contact member 160 is in thermal communication with the heat distribution member 130 and preferably, as shown in Figure 1A, the contact member 160 is mounted on the heat distribution member 130. This can be done by soldering, gluing, welding or any other suitable way. Both the contact member 160 and the heat distribution member 130 are shown to be substantially flat members. It is however noted that other shapes are also conceivable and the invention is not limited to the shapes shown in the drawing. The contact member 160 is arranged to directly contact a body (not shown) to be heated by the heating device 100, such as a pan. The heat distribution member 130 is preferably made of aluminum; the contact member 160 is preferably made of steel. However, other materials are also conceivable. It is noted that the provision of a separate contact member 160 is not essential. In fact, it is also conceivable that the heat distribution member 130 itself acts as contact member such that it is contact with said body to be heated. In other words, the heat distribution member 160 and the contact member 160 may be formed as a unitary or single member, such that both functions are integrated.

Figure 1B shows the heating device 100 of Figure 1A in a bottom view. The heating coil 120 is arranged in a (nearly) circular pattern on the first side 140 of the heat distribution member 130. Preferably, the heating coil 120 is attached to the heat distribution member 130 and comprises a substantially triangular cross-section (see Figure 1A) to maximize the contact area between the heat distribution member 130 and the heating coil120. It shall however be clear to a person skilled in the art, that other cross-sectional shapes are also possible, such as circular, rectangular etcetera. Due to the specific manner in which the heating coil 120 is arranged on the heat distribution member 130, or the combination of a heat distribution member and a contact member as discussed above, one or more regions may form during operation (use) of the heating device 100 that have a higher temperature than regions of the heat distribution member 130 adjoining such one or more regions. Such region(s) may be defined as a hot spot, i.e. as a localized region which has a temperature higher than the average temperature of the heat distribution member 130, or may be defined as a region that has a temperature during operation which is in the range of 80 to 100% of a maximum temperature of the heat distribution member 160. In Figure 1B the specific arrangement of the heating coil120 gives rise to a hot spot 170. As can be seen, the hot spot 170 is found on the line A-A, which is the line of symmetry for the heating coil 120. In other configurations of the heating coil 120 the hot spot may not be located on a symmetry line of course. This is in particularly true for arrangements or patterns of the heating coil 120 which are not symmetric.

The heating device 100 according to the invention is particularly suitable in the process of preparing food. To avoid overheating and/or scorching of the food being prepared, a temperature sensor 200 is provided in the region in which the hot spot 170 occurs during operation of the heating device 100. As the temperature can in such a way be controlled on the basis of the highest temperature that is transmitted, scorching and/or overheating can be avoided. Furthermore, as the accuracy of the temperature measurement is increased, it is possible to use a less sophisticated temperature and therefore cheaper sensor and controller for the heating device. As indicated earlier, the provision of a separate contact member 160 is not essential. In fact, it is also conceivable that the heat distribution member 130 itself acts as contact member such that it is contact with said body to be heated. In other words, the heat distribution member 160 and the contact member 160 may be formed as a unitary or single member, such that both functions are integrated. What is relevant however is that the hot spot is defined on that part of the heating device that is contact with the foodstuff. In some embodiments that will be the contact member 160, in some embodiments that will be the distribution member 130.

Furthermore, as the temperature sensor 200 is located in the hot spot 170 of the heat distribution member 130, a faster response time can be achieved. Furthermore, control of the heating device 100 is improved in comparison with the solution of the prior art in which the temperature sensor 200 is located in a cold spot, as overshoot of the set temperature is avoided.

Even further improved results may be achieved when the temperature sensor 200 is in thermal communication with the heating coil 120. It is noted, that depending on the accuracy of the temperature control required, the region that defines the hot spot 170 may be smaller or larger than the region indicated in Figure 1B. The smallest region will be defined by the contact area (footprint) of the temperature sensor 200.

The temperature sensor 200 can be mounted directly to the heat distribution member 130. However, it is also possible to bring the temperature sensor 200 in direct thermal communication with the contact member 160 to even further improve control of the heating device 100. In the case that the heat distribution member and the contact member are one and the same member, the temperature sensor can be directly mounted on the contact member.

In case both a heat distribution member 130 and a contact member 160 are provided, the heat distribution member 130 may be provided with a bore 210 (see Figure 1A) that is covered by the contact member 160. The temperature sensor 200 can now be positioned in said bore 210 and be mounted to the contact member 160 (not shown in the drawing) in a manner known per se to the person skilled in the art. In case the heat distribution member and the contact member are one and the same member, the bore 210 may be a blind bore in which the temperature sensor 200 is mounted.

In order to electrically shield the temperature sensor 200, which may for example be a thermocouple, an NTC sensor (which is a kind of thermistor) or the like, from the other electrical components of the heating device 100, the temperature sensor 200 is preferably provided with an insulation layer (not shown) that electrically insulates the temperature sensor 200. Such an insulation layer may be in the form of a coating or in the form of a separate cap that is positioned over the temperature sensor 200, or at least over that part thereof that needs insulation. Examples of material that can be used for said layer is a Kapton or Aluminum Nitride. When applying said layer care must be taken not to reduce the negative effect of the layer on the heat transfer to the temperature sensor 200. Typical values of the thickness of the insulating layer are between 25 µm to 750 µm, preferably between 50 µm to 500 µm.

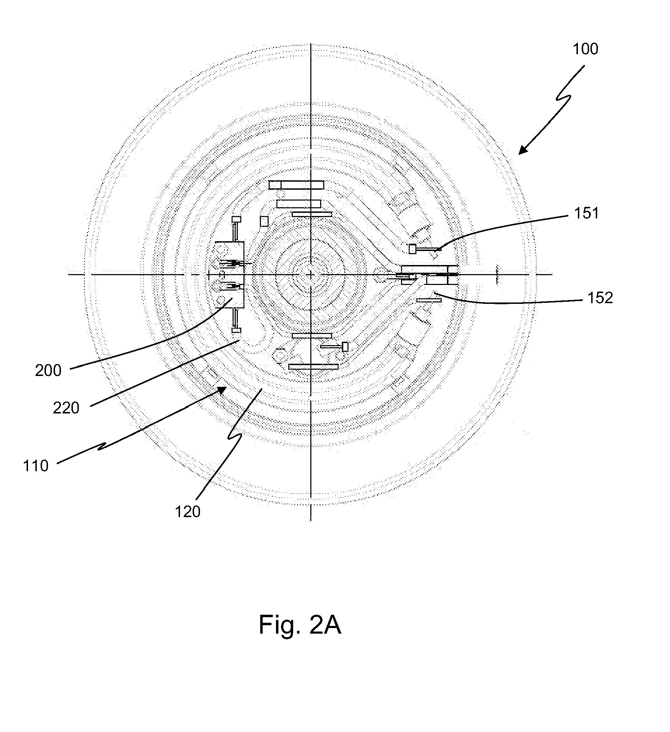

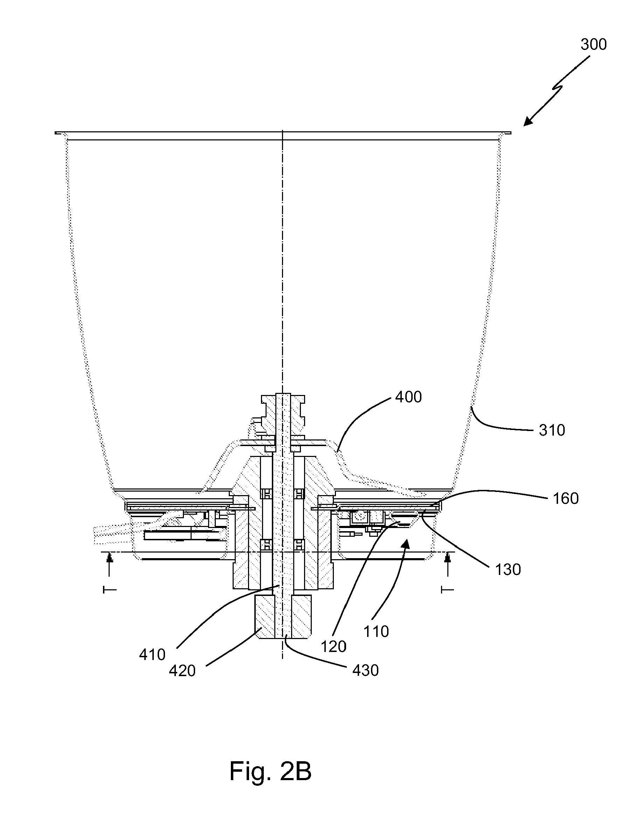

The heating device 100 according to the invention can advantageously be used in combination with a kitchen appliance, such as a food processor. This is for example shown in Figures 2A and 2B. Such food processors will produce vibrations and it may therefore be beneficial to mount the temperature sensor 200 in an elastic manner to either the heat distribution member 130 or to the contact member 160 what the case may be. Furthermore, to ensure proper contact the temperature sensor 200 may be spring-loaded for example by using an elastic silicone pad that is urged against the temperature sensor 200. This is not further shown in the drawing.

As indicated, Figures 2A and 2B show a kitchen appliance or food processor 300 in respectively a cross-sectional view along a longitudinal axis in Figure 2A and in a cross-sectional view along a line T-T (see Figure 2A) in Figure 2B. The kitchen appliance 300 in the example of Figures 2A and 2B is a food processor comprising a vessel 310 for containing foodstuff (not shown). Further, the kitchen appliance 300 comprises a heating device 100 of similar design as the heating device of Figures 1A and 1B, except that the heating device 100 as shown in Figures 2A and 2B is integrated in the kitchen appliance 300. Accordingly, the heating device 100 comprises a heat distribution member 130 on top of which a contact member 160 is provided in thermal communication therewith. The contact member 160 forms the bottom part of the vessel 310. Consequently, the vessel 310 is in thermal communication with the heat distribution member. As mentioned above, the heat distribution member 130 and the contact member may be designed as a single member.

The heating device 100 again comprises an electrical heating coil 120 that is in thermal communication with the heat distribution member 130. As was explained above, the heating device 100 comprises an electrical temperature sensor 200 which is positioned in a hot spot (see Figure 1B). The temperature sensor 200 is provide with electrical power by means of power lines 220. The kitchen appliance 300 further comprises a rotatable tool 400 that is mounted on a rotatable drive shaft 410. The drive shaft 410 is provided with coupling means 420 at its distal end 430, which coupling means 420 can couple with a drive motor (not shown) of a base (not shown) of the kitchen appliance 300.

Other examples of devices in which a heating device according to the invention can be advantageously used are: pumps with an integrated heating device such as for dishwashers, water cookers, egg boilers, heaters for removal of wallpaper, hair straighteners, rice cookers etcetera. In fact, any heating device or application which may suffer from overheating may benefit from a temperature sensor that is positioned in a hot spot of such a heating device.

Determination of a hot spot can be done in several ways. One way would be to turn on the heating device and to determine those regions of the heat distribution member, the contact member or the heating member that have a higher temperature than adjoining regions. This can for example be done by using an infrared camera. Another way is to determine where the highest density of heat generation takes place, for example by performing calculations using for example finite-element techniques. It is noted that it is possible that a plurality of hot spots exist. In such a case it is possible to provide temperature sensors in one or more of the hot spots, or to only use one hot spot. A definition of a hot spot which is practical in use, is a region that has a temperature during operation which is in the range of 80 to 100% of a maximum temperature measured. Preferably, said range is between 85 to 100% and even more preferably said range is between 95 to 100%. It is noted here that the definition "during operation" includes a phase in which the heating device is heating up, and a phase in which the heating device is in a (near) steady state. In both situations hot spots are present, where during the heat up phase the difference in temperature between hot spots and cold spots is more prominent than in a steady state situation.

In the above the invention has been described by means of the example that the heat source is an electrical heater in the form of a coil. It is however also conceivable that the heat source is an induction heater, a microwave heater etcetera.

While the subject-matter has been illustrated in the drawings and the foregoing description, such illustration and description are to be considered illustrative or exemplary and not restrictive; the subject-matter is not limited to the disclosed embodiments. Other variations to the disclosed embodiments can be understood and effected by those skilled in the art of practicing the claimed subject-matter, from a study of the drawings, the disclosure and the appended claims. Use of the verb "comprise" and its conjugations does not exclude the presence of other elements other than those stated in a claim or in the description. Use of the indefinite article "a" or "an" preceding an element or step does not exclude the presence of a plurality of such elements or steps. The Figures and description are to be regarded as illustrative only and do not limit the subject-matter. Any reference sign in the claims should not be construed as limiting the scope.

## Claims

1. A heating device (100), comprising:
- a heat distribution member (130);
- a heat source (110) which is in thermal communication with the heat distribution member (130), said heat source (110) being arranged to heat the heat distribution member (130), and
- a temperature sensor (200) for sensing a temperature of the heat distribution member (130),
**characterized in that**
- the temperature sensor (200) is positioned in a region of the heat distribution member (130), which region corresponds to a hot spot (170) of the heat distribution member (130) during operation of the heating device (100).

2. Heating device (100) according to claim 1, wherein the heat source (110) comprises a heating oil(120) that is attached to a first side (140) of the heat distribution member (130).

3. Heating device (100) according to claim 2, wherein the heating oil(120) is an electrical heating member.

4. Heating device (100) according to any of the previous claims, wherein the temperature sensor (200) is provided with an insulation layer, electrically insulating the temperature sensor (200) from the heat distribution member (130).

5. Heating device (100) according to any of the previous claims, wherein the temperature sensor (200) is in thermal communication with the heat source (110).

6. Heating device (100) according to any of the previous claims, wherein the heat distribution member (130) is provided with a bore (210) in said region and wherein the temperature sensor (200) is positioned in said bore (210).

7. Heating device (100) according to any of the previous claims, wherein the heating device (100) further comprises a contact member (160) provided on a second side (141) of the heat distribution device (130) and in thermal communication therewith, the contact member (160) being arranged to directly contact a body (300) to be heated by the heating device (100).

8. Heating device (100) according to claim 7, wherein the contact member (160) and the heat distribution device (130) are integrated in a single member.

9. Heating device (100) according to claim 7 or 8, wherein the contact member (160) covers said bore (210) and wherein the temperature sensor (200) is attached to said contact member (160).

10. A method of producing a heating device (100), the method including:
- providing a heat distribution member (130);
- providing a heat source (110) in thermal communication with the heat distribution member (130);
- determining a region of the heat distribution member (130) which region corresponds to a hot spot (170) of said heat distribution member (130) during use of the heating device (100), and
- mounting a temperature sensor (200) in said region that corresponds to the hot spot (170) of the heat distribution member (130).

11. The method according to claim 10, further including:
- providing a bore (210) in the heat distribution member (130), and
- positioning the temperature sensor (200) in said bore (210).

12. The method according to claim 11, further including
- providing a contact member (160) in thermal communication with the heat distribution member (130) and covering the bore (210), and
- mounting the temperature sensor (200) to the contact member (160).

13. The method according to claim 12, further including
- electrically insulating the temperature sensor (200).

14. A temperature controlled kitchen appliance (300) comprising a vessel (310) for containing foodstuff, the kitchen appliance (300) comprising a heating device (100) according to any of the claims 1 to 8, and wherein the vessel (310) is in thermal communication with the heat distribution member (130).
